(19) Europäisches Patentamt
European Patent Office
Office européen des brevets

(11) EP 2 089 504 B1

(12) **EUROPEAN PATENT SPECIFICATION**

(45) Date of publication and mention
of the grant of the patent:
**20.02.2013 Bulletin 2013/08**

(51) Int Cl.:
***C12G 1/04*** *(2006.01)*      ***B01F 3/04*** *(2006.01)*

(21) Application number: **07822259.3**

(22) Date of filing: **06.11.2007**

(86) International application number:
**PCT/EP2007/061942**

(87) International publication number:
**WO 2008/055905 (15.05.2008 Gazette 2008/20)**

(54) **METHOD AND APPARATUS TO DELIVER PREDETERMINED AMOUNTS OF GAS INTO A LIQUID**

VERFAHREN UND VORRICHTUNG ZUR ZUFÜHRUNG VORBESTIMMTER GASMENGEN IN EINE FLÜSSIGKEIT

PROCEDE ET APPAREIL POUR INTRODUIRE DES QUANTITES PREDETERMINEES DE GAZ DANS UN LIQUIDE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.11.2006 CL 200602997**

(43) Date of publication of application:
**19.08.2009 Bulletin 2009/34**

(73) Proprietor: **YT Ingenieria Ltda.**
**Catemu V Región (CL)**

(72) Inventors:
• **TOMASELLO, R. Gonzalo**
**Catemu, V Región (CL)**

• **YAKASOVIC, S. Tomás**
**Catemu, V Región (CL)**

(74) Representative: **Carpintero Lopez, Francisco et al**
**Herrero & Asociados, S.L.**
**Alcalá 35**
**28014 Madrid (ES)**

(56) References cited:
**DE-A1- 1 442 341      DE-A1- 2 404 500**
**DE-A1- 2 720 167      ES-A1- 2 246 651**
**ES-U- 1 044 316      ES-U- 1 044 325**
**FR-A- 2 903 701      US-A- 4 345 511**

**Description**

The present invention relates to a method and apparatus to deliver predetermined amounts of gas into a liquid or wherever a highly accurate addition of known amounts of gas is required. The method of the present invention finds application mainly in the wine industry, wherein sulfur dioxide application is required to avoid grape must and wine oxidation, to avoid growth of undesired microflora and to control fermentation.

BACKGROUND OF THE INVENTION

Sulfurous anhydride (or sulfur dioxide; $SO_2$) is used in enology due to its antioxidant action and as an antiseptic that delays the development of undesired microflora such as yeasts and other detrimental organisms, and also because it helps to solubilize phenolic substances. Wine sulfitation is carried out with the aim of controlling wine fermentation.

The Patent ES 2246651 refers to a dispenser that delivers a gas-containing solution. This dispenser introduces a sulfurous anhydride solution into must transfer pipes. This liquid dispenser has certain accuracy restrictions that could be acceptable for large volumes, but cannot be used in lower scales. Furthermore, it adds water to the system.

The Patent ES 1,004,225 U describe a sulfurous anhydride dispenser apparatus based on a flow regulating valve that operates by adding gas into must transfer pipes to stop fermentation while the deposits used for fermentation are being filled. This in-line gasification process operates by delivering a flow amount into the transference pipe, and thus gasifying it. This dispenser apparatus does not include any time measuring system so as to establish a gas volume or gas grams to be added, therefore it is not useful in more accurate or lower scale applications.

These large scale sulfitation methods, even when it is possible to achieve the addition of desired amounts of $SO_2$, have the disadvantage of being inaccurate when applied to lower amounts of must or wine in its different production stages.

The sulfitation or sulfur dioxide addition process at a lower scale, for instance, can be carried out manually by means of the addition of a sulfurous anhydride solution at a concentration of about 5%. Sulfur anhydride is prepared by bubbling gaseous $SO_2$ in pure water until the solution reaches the density that indicates the desired solution concentration. The preparation of this solution is carried out outdoors, where gaseous sulfurous anhydride is bubbled in a water pond. Usually, this is a long process and gas emanations are produced both during dissolution and solution handling in all the sulfitation process. This process has the disadvantages of requiring a previous process to prepare the solution and adding a certain amount of water to wine. The amount of added water in one year can reach 0.5% or more of the total deposit volume.

The use of this manual sulfitation method, even when the required amount of $SO_2$ is added within a certain level of accuracy, has the disadvantage of adding undesired elements to wine, such as water.

The sulfitation method of the present invention does not require the preparation of a solution by bubbling $SO_2$, with the associated inconveniences in time and generated malodorous emanations, and it is not necessary to measure the solution density before the application. Furthermore, water is not added to wine and human failures are minimized thanks to a measuring device and the application accuracy of the method.

The sulfitation or sulfur dioxide addition process in a lower scale can also be performed manually with the addition of potassium metabisulfite or potassium bisulfite powders, which are dissolved in little water, must or wine and are added to the treated product as a homogenate. Theoretically, 100 g of metabisulfite produce 57.6 g of $SO_2$ equivalent. With the use of potassium metabisulfite, potassium is added to must or wine, which is an undesired product during the sulfitation process.

The use of this manual sulfitation method, even when the required amount of $SO_2$ is added within a certain level of accuracy, has the disadvantage of adding undesired elements to wine, such as potassium.

The sulfitation method of the present invention does not require the preparation of a solution, thus avoiding errors in metabisulfite weighting, which is a tiresome, delicate and human-error vulnerable process. Furthermore, potassium salts are not added to wine and human failures are minimized thanks to a measuring device and the application accuracy of the method.

With the dispenser apparatus of the present invention, these problems have been overcome and a precise delivery of known amounts of gaseous $SO_2$ to wine without adding undesired elements has been achieved.

The gas dispenser device of the present invention is useful to deliver $SO_2$ into smaller barrels, and is also useful when using containers with larger volumes, in such a way that it can also be used with larger barrels.

DE1442341 discloses an apparatus comprising a compressed sulphur dioxide source having a pressure reducing valve, an inlet, a measurement chamber, and a pressure sensor being adapted to continuously measure the temperature and pressure, respectively.

DE2404500 discloses an apparatus comprising a compressed sulphur dioxide source having a pressure reducing valve, an inlet duct, and an expansion chamber, from which the gas is conveyed via a pressure sensor, a temperature sensor and a gas flow regulating valve to an injection pipe comprising a multi orifice nozzle.

DETAILED DESCRIPTION OF THE INVENTION

The aim of the present invention comprises the development of a simple apparatus that allows delivering known and accurate amounts of gas in grams. It has application in the wine industry, wherein it is required to control the amount of free $SO_2$ in must and wine in the different production stages.

Furthermore, the apparatus of the present invention is easily handled and manipulated, and can have a reduced size that allows the use of said apparatus even as portable equipment and enabling its use in smaller size containers, such as barrels.

The gas dispenser apparatus allows delivering from little doses, gas fractions measured in grams, to kilograms, by using the same technology.

The nature of the present invention will be understood more clearly from the description of the enclosed figures and from the description of one embodiment of the present invention.

DESCRIPTION OF THE FIGURES

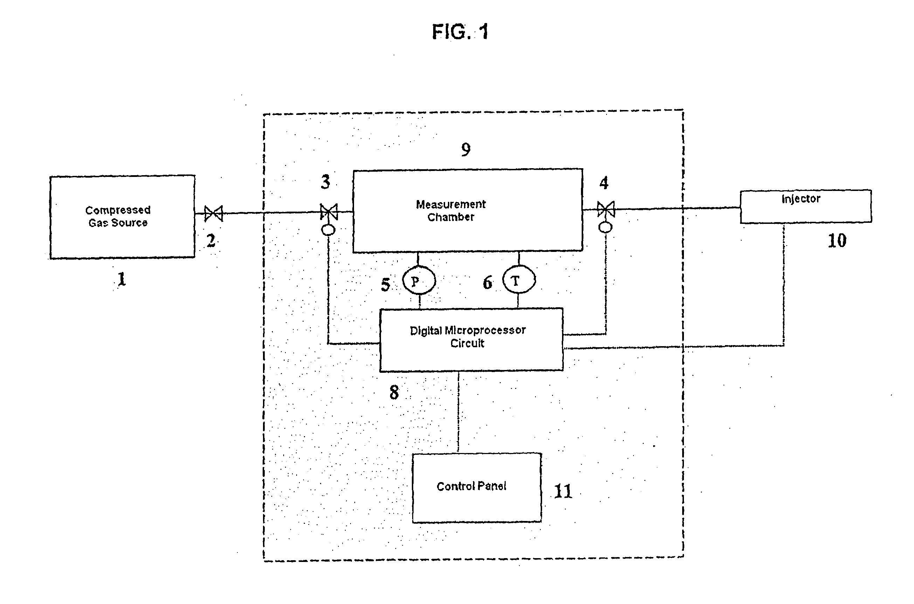

Figure 1 shows a schematic view of the apparatus of the present invention, in which the gas circuit is represented by a continuous line, the control circuit is represented by a dotted line and the equipments directly involved in delivery are represented by dashed lines.

In the apparatus of the present invention that comprises a known volume container or measurement chamber (9) to contain the gas to be injected, this measurement chamber (9) is connected by means of an inlet duct to a compressed gas source (1) or to a pressurized line from which the gas to be delivered could be obtained.

A gas cut-off valve (2) and an inlet valve (3) are located between the compressed gas source (1) and the measurement chamber (9). The inlet valve (3) is an electrovalve that allows regulating the gas passage from the compressed gas source (1) to the measurement chamber (9).

The measurement chamber (9) is connected by means of an outlet duct to a final delivery system or injector (10). An outlet valve (4) is located between the measurement chamber (9) and the final delivery system or injector (10). The outlet valve (4) is an electrovalve that allows regulating the gas passage from the measurement chamber (9) to the final delivery system or injector (10).

Two sensors are located inside the measurement chamber (9) to measure pressure and temperature inside the measurement chamber. The pressure sensor (5) allows measuring the gas pressure inside the measurement chamber (9) continuously, at regular intervals or every time that a pressure record is required. The temperature sensor (6) allows measuring the temperature inside the measurement chamber continuously.

The temperature and pressure sensors are connected to an electronic control system that comprises a digital microprocessor circuit (8) and a control panel (11). The microprocessor allows processing the information delivered by the temperature and pressure sensors and performs the required calculations from the data entered in the control panel (11) to calculate the correct gas dose to be applied.

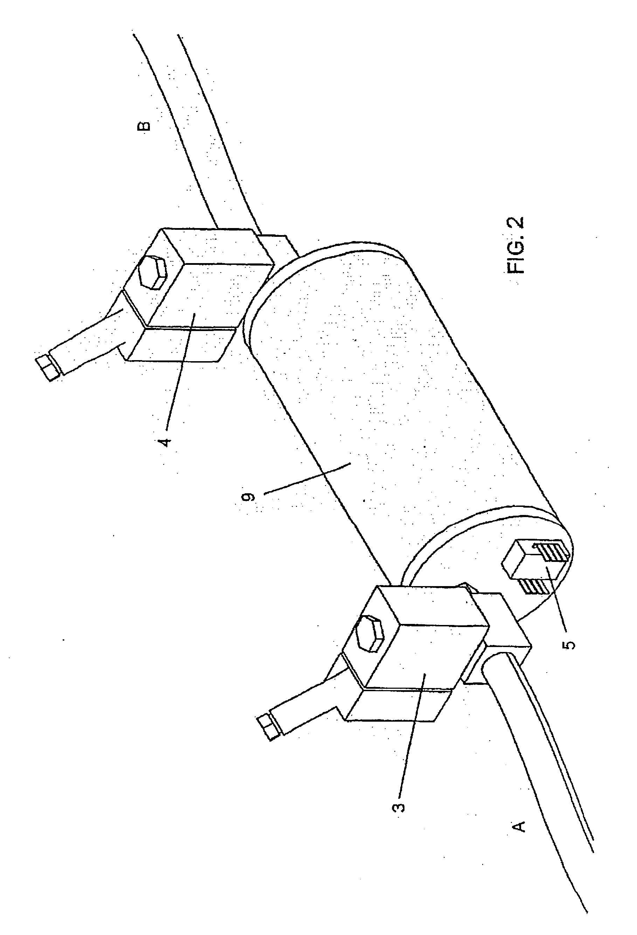

Figure 2 shows a top view of a preferred embodiment of the dispenser apparatus of the invention, which comprises a known volume container or measurement chamber (9) that is connected to a gas source by means of an inlet duct (A). The measurement chamber (9) is connected by means of an outlet duct (B) to a final delivery system.

In Figure 2, the measurement chamber (9) has been schematized as having a cylindrical shape, nevertheless said chamber may be shaped with any form and it must fulfill the condition of having a known and constant volume with which the equipment is calibrated. Furthermore, the size of the chamber is determined by the amount of gas to be delivered and the material must be resistant to gas pressure and inert to the gas.

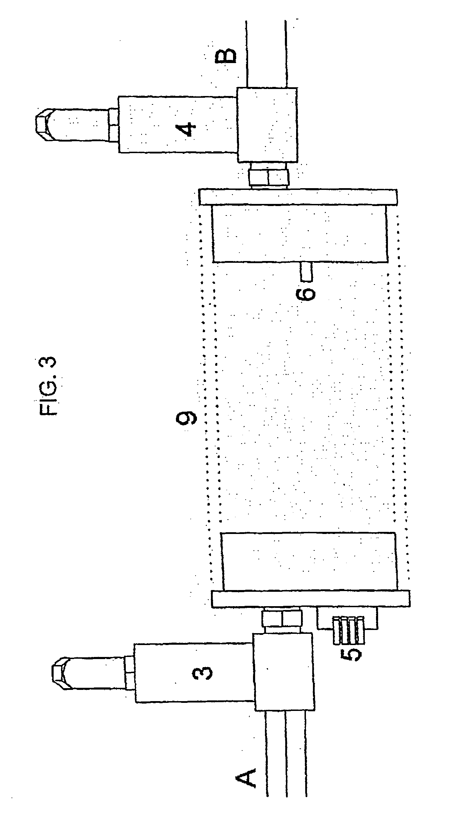

Figure 3 shows a cross section of the preferred embodiment of the apparatus shown in Figure 2. The known volume container or measurement chamber (9) has been drawn by means of a dotted line as a means to point out that the shape of the chamber is not a determinant factor for the gas dispenser apparatus of the present invention. Moreover, the temperature sensor (6) is shown inside the measurement chamber (9) in Figure 2.

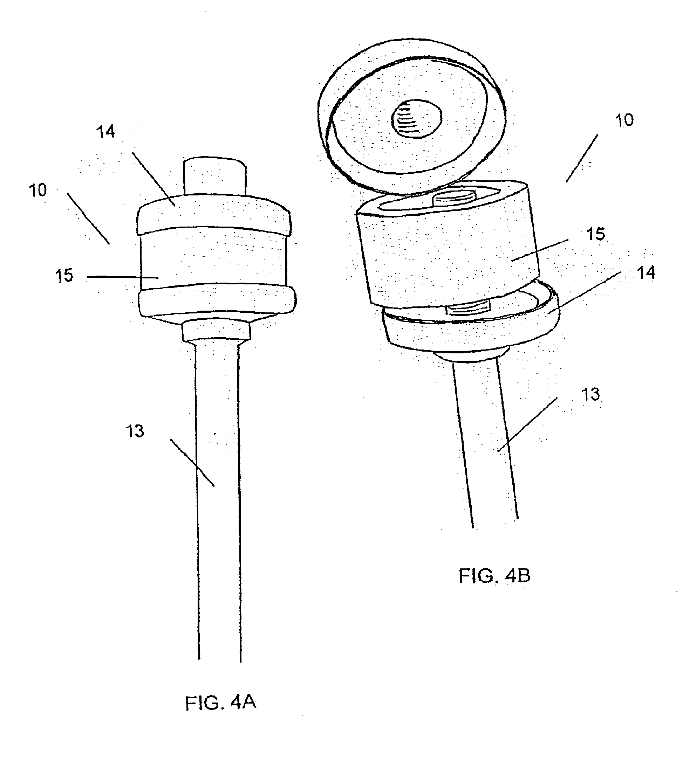

Figures 4A and 4B represent one of the preferred embodiments of the injection system (10) of the dispenser apparatus of the present invention, which comprises a long application tube (13) and a diffuser (14). The diffuser comprises a microperforated cylinder (15) made of porous material. Figure 4A represents a top view of a preferred form of the injection system (10) and Figure 4B shows the injection system (10) with each of its parts illustrated separately.

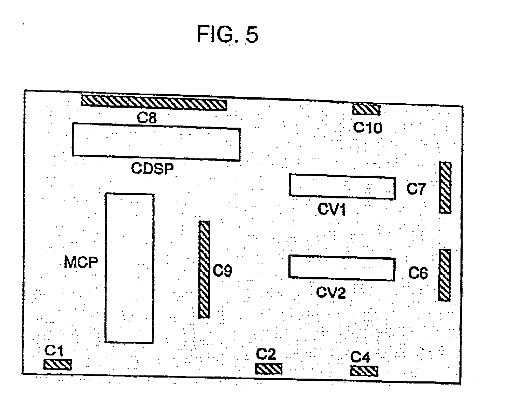

Figure 5 illustrates a diagram of the main components of the electronic circuit. Figure 5 represents the microprocessor (MCP), the display controller (CDSP), the valve controllers (CV) and the connectors (c).

More specifically, Figure 5 illustrates the following components:

CV1: measurement chamber inlet valve controller
CV2: measurement chamber outlet valve controller
C1: power source connector

C2: internal temperature sensor connector (inside the measurement chamber)
C4: internal pressure sensor connector (inside the measurement chamber)
C6: measurement chamber outlet valve connector
C7: measurement chamber inlet valve connector
C8: display connector
C9: control panel connector (all the components except the display)
C10: injection system connector

In one of the preferred embodiments, the dispenser apparatus of the present invention is associated to a cart on which a compressed or liquefied gas cylinder can be transported, from which the gas dispenser apparatus is fed. This cart can allow space for mounted batteries or can be used directly connected to the main current source or other energy sources. The cart is devised to allow a more expedite approach to the working place, considering that cart mobility will be fairly required. In general, pressure inside the measurement chamber is slightly higher than the discharge pressure, which ensures an optimum use of the gas accumulated inside the cylinder.

DETAILED DESCRIPTION OF THE INVENTION

The present invention relates to an apparatus to deliver predetermined amounts of gram amounts of gaseous $SO_2$ into a liquid such as must or wine, or wherever a highly accurate addition of known amounts of gas is required. The dispenser apparatus of the present invention allows injecting gaseous $SO_2$ directly into wine; for this aim, the dispenser apparatus has a delivering system or injector that comprises a long application tube and a diffuser that divide the gas into very small bubbles to facilitate its dissolution into wine.

The gas dispenser apparatus comprises mainly:

i) a primary gas circuit that begins with the feeding cylinder or compressed gas source (1), or a pressurized line from which the delivered gas could be obtained. A gas cut-off valve (2) is located downstream the gas source. The gas from the gas source (1) is conducted by means of an inlet duct or high pressure hose (A) to the measurement chamber inlet where an inlet electrovalve (3) that regulates the gas passage into the measurement chamber (9) is located. Depending on the gas storage pressure in the feeding system or compressed gas source and on the delivering pressure, a pressure regulating valve could be required at the outlet of the feeding system together with the cut-off valve (2).

ii) Measurement chamber: a known constant volume measurement chamber (9) is located immediately downstream the inlet valve (3), wherein two sensors are installed: a pressure sensor (5) that allows measuring the pressure inside the chamber continuously or every time a pressure record is required, and a temperature sensor (6) that allows measuring the temperature inside the measurement chamber continuously, at regular intervals or every time a temperature record is required. The chamber ends at an outlet electrovalve (4) that allows discharging the delivered gas dose.

iii) A secondary gas circuit that begins at the outlet valve (4), which allows the gas passage through a high pressure hose or outlet duct (B) to a final dispenser system.

iv) The outlet duct ends at a final delivery system (10) comprising an injector that facilitates delivering gaseous $SO_2$ in the liquid bulk inside the container.

v) An electronic control system. This system is the equipment brain and consists mainly in a last generation microprocessor (8) and a control panel (11). When the delivering phase ends, the outlet valve (4) is closed by the microprocessor (8), when this microprocessor receives a signal produced by the final delivery system or injector (10), according to delivered and measured data, and then a new charge cycle of the measurement chamber (9) begins.

The microprocessor (8) stores in its memory a program that allows a correct data interpretation in order to execute the necessary actions for gas delivering. This microprocessor receives information entered by the user from a control panel (11). Using these data, a last generation microprocessor calculates the exact dose to be applied, which is determined by means of the pressure drop inside the measurement chamber during discharge.

The control panel (11) comprises a display system, buttons and knobs that allow turning the equipment on and off, visualizing and fixing the desired gas dose, and checking internal registers and general information. In the control panel, the gas dose in mass units to be delivered is specified. Using the information regarding the gas mass to be delivered, together with the data received from the pressure sensor (5) and the temperature sensor (6) of the apparatus, the electronic control system is able to calculate the parameters required for delivering accurate gas amounts.

The present invention is defined in the enclosed independent claims.

DETAILED DESCRIPTION OF THE COMPONENTS

Inlet valve (3)

The inlet valve (3) or inlet electrovalve allows to cut-off the gas passage from the gas source (1) to the measurement chamber (9). This inlet electrovalve must be suitable for the operation conditions, i.e. for the inlet pressure versus the measurement chamber pressure. The valve size must be suitable to reach the delivered doses in reasonable time.

Outlet valve (4)

The outlet valve (4) or outlet electrovalve allows to cut-off the gas passage from the measurement chamber (9) through the outlet duct to the final delivery system or injector (10). This outlet electrovalve must be suitable for the operation conditions, i.e. for the measurement chamber pressure versus the gas discharge pressure. The valve size must be suitable to reach the delivered doses in reasonable time.
The material of the electrovalves must be suitable for using it with the gas and the materials of the body and parts in contact with the gas must be inert to the gas.

Measurement chamber (9)

The measurement chamber (9) must fulfill the basic requirement of having a constant and known volume, since this volume value is used to calibrate the equipment. The material of the measurement chamber must be suitable for using it with the gas or gas mixtures to be delivered. The measurement chamber can have any shape, with the condition that a constant and known volume is ensured. The preferred shapes for the measurement chamber are those having substantially smooth or rounded surfaces, being preferred convex or concave walls, with ellipsoidal or cylindrical shapes being the most preferred shapes for the chamber, due to their better mechanical performance under conditions of internal gas pressure. The measurement chamber size can vary from a few cubic centimeters to many liters or cubic meters, preferably from 50 to 1000 cubic centimeters, more preferably from 50 and 500 cubic centimeters, and most preferably from 100 to 200 cubic centimeters. The chamber volume is determined by the range of grams to be delivered, the inlet pressure and the discharge pressure, which is determined when constructing the gas dispenser apparatus.

Measurement chamber pressure sensor (5)

The measurement chamber pressure sensor (5) can deliver analog or digital outputs, and must be mounted inside the chamber or externally connected to the chamber, in order to determine the internal pressure. The response time of the sensor will depend on the type of final application, being preferred those having fast response times to obtain a higher accuracy. The size of the pressure sensor must be suitable for the size of the measurement chamber. The material of the pressure sensor must be inert to the gas or gas mixture to be delivered.

Measurement chamber temperature sensor (6)

The measurement chamber temperature sensor (6) can deliver analog or digital outputs, and must be mounted inside the chamber or externally connected to the chamber, in order to determine at every moment the gas or gas mixture temperature inside the chamber. The response time of the sensor will depend on the type of final application, being preferred those having fast response times to obtain a higher accuracy. The size of the temperature sensor must be suitable for the size of the chamber. The material of the temperature sensor must be inert to the gas or gas mixture to be delivered. In the case of large or larger chambers, more than a temperature sensor can be present to measure temperature in different zones and to obtain a more representative temperature measure inside the measurement chamber.

Delivery system or injector (10)

The gas delivery system comprises a long application tube and a diffuser that divides the gas into very small bubbles to facilitate its dissolution into wine. The length of the application tube is such as to allow gas bubbles to dissolve into the wine must before reaching surface level. Furthermore, the length of the application tube depends on the bubble size, which in turn is given by the type of microporous material of the diffuser. The length of the tube to be used depends on the container size. For instance, for a container in the order of about 200 liters, such as a barrel, the application tube length is 30 cm or more, preferably 40 cm or more.

The diffuser comprises a microperforated cylinder made of porous material. The porous material can be selected from polyethylene, stainless steel, ceramic or any other material that does not react with wine; the remaining parts or the tube can be preferably made of stainless steel.

Control panel (11)

The control panel (11) allows entering delivery parameters, such as the gas mass to be injected or delivered. To specify the amount of gas to be delivered, the molecular weight of the gas or gas mixture to be delivered must be previously specified. The previous specification of the gas molecular weight could be done by means of a set-up in the printed circuit or the panel by using selectors (jumpers, switches), through the control panel (using a keyboard, dial or any other mechanism arranged for this aim), by fixing said specification in the microprocessor or through a data channel (serial, radiofrequency or any other alternative data transfer form), depending on the equipment configuration. The amounts to be delivered can be entered by using a dial, a button selector or the like, or a keyboard. A preferred option to enter the amounts to be delivered uses a dial with visualization of the value in the control panel display.

The control panel also allows visualizing the number of injections performed both the absolute total (since equipment start-up) and partial totals as defined by the user, by using a "set-to-zero" option. This last option allows controlling the deliveries carried out in a given time period. The total value allows controlling the use of the equipment and programming maintenance operations. Moreover, control panel indicators allow visualizing if the system is plugged and powered-on and if the chamber is charged to start delivering. These control panel indicators also enable visualizing if the pressure reached or not the required value inside the chamber. If the pressure does no reach the required value, a pressure failure could be present in the inlet line.

Digital microprocessor circuit (8)

The digital microprocessor circuit (8) allows performing the delivering logic and is based on a last generation microprocessor, which considerably reduces the size when compared to older technologies (analogical). The microprocessor can be considered the brain of the equipment, since this microprocessor carries out the required calculations to carry out delivery, such as measuring and interpreting such measures. The system develops basically the following logic and sequences, though not necessarily in this same order and not the only logic and sequences carried out. The process is described in the microprocessor by means of a program specially designed for the microprocessor.

The gas dispenser apparatus of the present invention can have an electric power source. The power source can be directly the main electric network or it can be obtained from other sources like batteries, generators, solar cells, wind-powered systems, with the only condition that they must be able to generate the energy required for the function of the apparatus. The energy source is proportional to the equipment size, even though in general 12-24 volts are preferred to power the systems, with the amperage required for the components to function.

A preferred embodiment of a power source is the use of batteries associated to the equipment, such as to operate during one entire work day without the need for recharge. The recharge can be made by contacting the equipment by means of a charger to an electric energy source. This energy form allows the apparatus to be used in more remote places without the need of a permanent connection to the electric network.

The gas dispenser apparatus of the present invention has a size that can vary according to the application or use thereof, e.g. the format of the equipment can be small such as portable equipment or the format of the equipment can be large such as stationary equipment.

Accordingly, two additional preferred embodiments of the dispenser apparatus of the present invention can be devised.

One preferred embodiment of the dispenser apparatus of the present invention comprises a completely portable equipment having a weight that allow to be carried completely by one human being, and giving said human being freedom to work. This dispenser apparatus uses a small container or cylinder as compressed gas source that allows storing the gas to be delivered, thus enabling a certain operation time, e.g. allows storing the amount of gas used in an entire day or half a day; when this time is completed, the compressed gas source must be recharged from a larger gas deposit.

The dispenser apparatus of the present invention has a small size, wherein the measurement chamber occupies the principal volume, being this the main limiting factor for the use of these portable equipments.

The electronic circuit components of the present invention are inherently small, as well as the other electromechanical components. The batteries must be dimensioned for this use and it would be required to replace them during normal operation, depending on the equipment use. This equipment comprises an external battery recharge system, as well as an internal battery recharge system.

Another implementation of the dispenser apparatus of the present invention can be a mixture of the former embodiments, wherein the same portable pistol is used, but the gas can be fed by means of an external line, avoiding carrying the cylinder. Similarly, electric energy can be supplied externally through an electric network or other energy source, or by using batteries.

DESCRIPTION OF THE DELIVERY METHOD

The general concept of the dispenser apparatus of the present invention comprises applying an accurate amount of gas into a liquid by using a measurement chamber with a known and constant volume, by means of the pressure difference inside the measurement chamber, with the corresponding gas temperature correction. The equation that relates volume, pressure and temperature variables is well known as the ideal gas law:

$$P \cdot V = n \cdot R \cdot T$$

wherein P is the pressure inside the measurement chamber, V is the volume of the measurement chamber, n is the number of moles of gas and T is the absolute temperature. The parameter n is related to the gas mass by the molecular weight of the gas, and therefore the mass of gas stored in the chamber can be known. For gases that do not comply or adjust well to the ideal gas equation, the virial equation can be applied, which contains correction factors for the parameters under the operation conditions.

The measurement of the gas amount is based on applying the ideal gas law PV = nRT only inside the measurement chamber, i.e. it is necessary to know the pressure, temperature and volume inside the measurement chamber. The aim is to deliver a gas dose in grams, or in moles and then multiplying it by the molecular weight (64 g/mole for $SO_2$), to obtain the amount of grams of gas.

The amount of gas delivered is calculated in the following way. Considering a constant volume inside the measurement chamber and knowing that the temperature does not change considerably during the delivering process, we have:

$P_1 \cdot V = n_1 \cdot R \cdot T$, at the beginning of the injection process, and
$P_2 \cdot V = n_2 \cdot R \cdot T$, at the end of the injection process.

Taking the difference between both equations, we obtain:

$$P_1 - P_2 = (n_1 - n_2) \cdot R \cdot T / V,$$

Then, by reordering terms and working out the value of ($n_1 \cdot n_2$):

$$(n_2 - n_2) = (P_1 - P_2) \cdot V / R \cdot T,$$

wherein the equivalent of mole decrease inside the chamber is related to the pressure decrease inside the chamber. Finally, this mole decrease multiplied by the molecular weight of the gas gives the gas dose in grams: ($n_1 \cdot n_2$) · MW = grams dispensed.

To determine the required amount in grams of $SO_2$ to be injected, the following formula is used:

$$SO_2\ (g)\ =\ \frac{Dose\ \times\ F\ \times\ V}{\cdot 10^3}$$

Wherein:

Dose: free $SO_2$ required (mg/L)
F: factor that depends on wine type, varying from 1 to 3
V: wine volume to be treated in liters (L).

To determine the dose to be applied, it must be taken into account that the pressure inside the chamber cannot decrease without limits, and therefore the delivering process comprises:

> a) defining a maximum decrease of the chamber pressure
> b) calculating the equivalent in grams
> c) comparing the amount in grams to be applied with the amount in grams calculated in step (b)

If the amount in grams or the dose to be applied is larger, the number of successive delivery processes that have to be applied in order to reach the total applied amount in grams is calculated.

If the amount in grams or the dose to be applied is smaller than that calculated in step (b), a single injection is performed, wherein the final pressure is calculated depending on the amount in grams or dose to be applied, by using the former equations.

Generally, in the sulfitation process the desired dose is reached by means of a series of sub-doses that the equipment calculates and performs automatically.

The gas delivery method comprises: opening the inlet valve (3) to allow a controlled gas entry from a storage cylinder or compressed gas source to the constant volume measurement chamber (9); measuring pressure by means of a pressure sensor that registers continuously the pressure increase inside the measurement chamber up to a predetermined value. once the desired pressure is obtained, closing the inlet valve (3); measuring the temperature of the gas stored inside the measurement chamber by means of a temperature sensor (6); calculating by using the microprocessor the pressure decrease inside the measurement chamber required to discharge the gas mass predetermined at the control panel or calculating the number of doses of a fixed amount in grams of gas required to achieve total delivery; performing one application with the dispenser gun, which sends a signal to the microprocessor; after receiving the application signal, the microprocessor opens the outlet valve to start the discharge of gas from the measurement chamber; measuring the pressure difference of the gas inside the measurement chamber during gas discharge, until reaching a predetermined value to deliver a fixed amount of gas in grams. closing the outlet valve when the microprocessor detects the predetermined pressure difference inside the measurement chamber. Afterward, repeating the gas discharge in fixed gram doses until reaching the final delivery value.

The gas delivery method that considers entering basic parameters at the control panel comprises:

> opening the inlet valve while keeping closed the outlet valve and measuring the internal pressure difference inside the measurement chamber by means of the internal pressure sensor, until reaching the predetermined value to deliver a predetermined amount of gas in grams. closing the inlet valve and starting to measure temperature when this predetermined value is reached, as a function of the entered parameters at the control panel. The apparatus performs these measurements until it receives the discharge (or delivery) signal from the operator that activates the injection system. In this moment, the last internal pressure and internal temperature values are registered and, using these values, the microprocessor solves the formula hereinabove mentioned to determine the final internal pressure to be achieved inside the measurement chamber in order to deliver accurately the required amount of gas to the container. Once the microprocessor acquires the final internal pressure value under the current conditions, the microprocessor sends an opening signal to the outlet valve while continuously measuring the internal pressure of the measurement chamber until reaching the final calculated pressure. Subsequently, the outlet valve is closed. The delivery operation repeats the number of doses until reaching the predetermined amount of gas.

Gaseous $SO_2$ injections are applied in gram doses of $SO_2$, i.e. it is a gas injection measured in mass amounts with an accuracy of 0.1 gram and an application range from 0.1 gram to 9.9 grams, being said range adequate for the wine volume of one barrel.

The application of gaseous $SO_2$ is carried out in the bulk of the liquid inside the container, in such a way that gaseous $SO_2$ dissolves into wine before reaching the surface.

The gas dispenser apparatus of the present invention does not require stirring the wine after the application to homogenize the wine inside the deposit (this stirring process is regarded with distrust by enologists), because the application of $SO_2$ in the present invention is performed in the bottom of the deposit and not in the surface, as is the case in the application systems of the previous art.

In other embodiment of the invention, the dispenser apparatus comprises a measurement chamber having a larger known volume, which can attain 1000 $cm^3$, preferably 200, 300, 400, 500 or 600 $cm^3$, in order to deliver gaseous $SO_2$ in larger amounts, thus increasing the amount of $SO_2$ delivered in each application and allowing delivery of gaseous $SO_2$ into barrels with a volume around 2,000 liters. On the other hand, in the case of delivering gas in the bulk of a liquid contained in barrels, the size of the chamber can be 100 $cm^3$.

In the case of large containers, the amount required is much larger, usually in the order of a few kilograms of $SO_2$. The main problem found when adding $SO_2$ to large containers is to achieve the required amount of $SO_2$ is such a way that the product is applied as homogeneously as possible, so as to avoid or reduce mixing by pumping over. In this case, it is interesting to have a system that, on the one hand, is accurate in the addition and, on the other, can distribute doses throughout the entire volume of the container, so as to decrease concentration differences between different parts of the container.

Using the dispenser apparatus of the invention and the sulfitation method of the present invention, an accurate amount of gaseous $SO_2$ is added to increase the amount of free $SO_2$ in the container, in order to control fermentation; the amounts are determined as a function of the required free $SO_2$ as determined by an enologist, without adding water to the wine container. A mistake in $SO_2$ application to control fermentation can ruin the wine.

In these processes, dosage accuracy is very important, as well as ensuring that no mistakes are made. $SO_2$ to be injected is previously calculated by analyzing the wine and establishing free $SO_2$ parts per million in the wine and adding the difference to reach a desired level; this sulfitation process is equally important in barrels (220 liters) and larger containers (20,000 liters).

**Claims**

1.   An apparatus to deliver predetermined amounts of gas into a liquid, the apparatus comprising:

> • a measurement chamber (9) of known volume, which is connected to a compressed gas source (1) by means of an inlet duct, and connected to a final delivery system or injector (10) by means of an outlet duct;
> • at least one sensor to measure pressure and one sensor to measure temperature located inside the measurement chamber (9), the sensors being connected to an electronic control system that comprises a digital microprocessor circuit (8) and a control panel (11) wherein the microprocessor allows processing the information delivered by the temperature and pressure sensors and performs the required calculations from the data entered in the control panel (11) to calculate the correct gas dose to be applied;
> • an inlet valve (3) and an outlet valve (4),
> • where the inlet valve (3) is an electrovalve located between the compressed gas source (1) and the measurement chamber (9), that allows regulating the controlled passage of the gas from the compressed gas source (1) to the measurement chamber (9) while keeping the outlet valve (4) closed,
> • and where the outlet valve (4) is located between the measurement chamber (9) and the final delivery system or injector (10), which is an electrovalve that allows regulating the controlled passage of the gas from the measurement chamber to the final delivery system or injector (10)
> • wherein the final delivery system or injector comprises a long application tube (13) with a diffuser that divides the gas into small bubbles to facilitate its dissolution.

2.   The gas delivering apparatus according to claim 1, wherein the length of the application tube depends on the size of the bubbles emitted by the diffuser and the size of the container in which the liquid that will receive the injected gas is contained.

3.   The gas delivering apparatus according to claim 1, wherein the diffuser comprises a microporous material.

4.   The gas delivering apparatus according to any preceding claim, wherein the application tube has a length of 30 cm or more, preferably 40 cm or more.

5.   The gas delivering apparatus according to any preceding claim, wherein the pressure sensor (5) allows measuring the pressure inside the measurement chamber (9) continuously or every time a pressure record is required

6.   The gas delivering apparatus according to any preceding claim, wherein the temperature sensor (6) allows measuring the gas temperature inside the measurement chamber (9) continuously, at regular intervals or every time a temperature record is required.

7.   The gas delivering apparatus according to any preceding claim, wherein a gas cut-off valve (2) is located between the compressed gas source (1) and the inlet valve (3).

8.   The gas delivering apparatus according to any preceding claim, wherein the compressed gas source (1) contains any pressurized gas (liquefied or not) or said compressed gas source is a pressurized line from which the gas to be delivered can be obtained.

9.   The gas delivering apparatus according to any preceding claim, wherein the temperature and pressure sensors are connected to an electronic control system.

10. A method to deliver predetermined amounts of gas into a liquid, the method comprising

a) Providing the apparatus according to any claims 1-9;
b) Opening the inlet valve (3) to allow the controlled passage of a determined amount of gas into a measurement chamber (9) for the gas to be injected, while keeping the outlet valve (4) closed;
c) Measuring the internal pressure difference by the pressure sensor (5), which registers the pressure difference inside the measurement chamber (9) until reaching a predetermined value to deliver a predetermined amount of gas in grams, and once the desired pressure is reached, closing the inlet valve (3);
d) Measuring the temperature of the gas stored inside the measurement chamber (9) by the temperature sensor (6) once the inlet valve (3) is closed;
e) calculating by using a microprocessor the final internal pressure inside the measurement chamber required to discharge the gas mass which has been predetermined at a control panel (11), and the microprocessor subsequently sends an opening signal to the outlet valve while continuously measuring the internal pressure of the measurement chamber (9) until reaching the final calculated pressure; and closing the outlet valve;
f) injecting the gas divided into very small bubbles to facilitate its dissolution into the bulk of the liquid; and
g) repeating the delivery operation until reaching the predetermined amount of gas.

11. The gas delivery method according to claim 10, wherein said method comprises closing the gas outlet valve (4) after the microprocessor detects the calculated pressure inside the measurement chamber, wherein the final pressure is calculated depending on the amount in grams or dose to be applied.

12. The gas delivery method according to any of claims 10 or 11, wherein the application comprises doses in grams of gaseous $SO_2$.

13. The gas delivery method according to any of claims 10 to 12, wherein the application comprises injecting gas measured in mass amounts with an accuracy ranging from 0.1 grams to 9.9 grams.

14. The gas delivery method according to any of claims 10 to 13, wherein the application comprises injecting gas measured in mass amounts with an accuracy of 0.1 grams.

15. The gas delivery method according to any of claims 10 to 14, wherein the application comprises injecting gaseous $SO_2$ measured in mass amounts into the bulk of wine contained in barrels.

**Patentansprüche**

1. Gerät zum Einleiten von vorbestimmten Gasmengen in eine Flüssigkeit, wobei das Gerät

· eine Messkammer (9) mit bekanntem Volumen, die über einen Eintrittskanal an eine Druckgas-Quelle (1) angeschlossen ist und über einen Austrittskanal an ein abschließendes Einleitungssystem oder Injektor (10) angeschlossen ist;
· mindestens einen Sensor zur Druckmessung und einen Sensor zur Temperaturmessung, die innerhalb der Messkammer (9) angeordnet sind, wobei die Sensoren an ein elektronisches Steuersystem, das einen digitalen Mikroprozessor-Schaltkreis (8) und eine Steuertafel (11) umfasst, angeschlossen sind, wobei der Mikroprozessor die Verarbeitung der von den Temperatur- und Drucksensoren gelieferte Information ermöglicht und die erforderlichen Berechnungen aus den in die Steuertafel (11) eingegebenen Daten durchführt, um die richtige zu applizierende Gasdosis zu berechnen;
· ein Einlassventil (3) und ein Auslassventil (4),
· wobei das Einlassventil (3) ein zwischen der Druckgas-Quelle (1) und der Messkammer (9) gelegenes Elektroventil ist, das es ermöglicht, den kontrollierten Durchfluss des Gases aus der Druckgas-Quelle (1) in die Messkammer (9) zu regeln, während das Auslassventil (4) geschlossen bleibt,
· und wobei sich das Auslassventil (4) zwischen der Messkammer (9) und dem abschließenden Einleitungssystem oder Injektor (10) befindet und ein Elektroventil ist, das es ermöglicht, den kontrollierten Durchfluss des Gases aus der Messkammer in das abschließende Einleitungssystem oder Injektor (10) zu regeln,
· wobei das abschließende Einleitungssystem oder Injektor ein langes Applikationsrohr (13) mit einen Diffusor umfasst, der das Gas in kleine Blasen zerteilt, um dessen Auflösung zu erleichtern,

umfasst.

2. Gaseinleitungsgerät gemäß Anspruch 1, wobei die Länge des Applikationsrohrs von der Größe der vom Diffusor abgegebenen Blasen und der Größe des Behälters, in dem die das eingespritzte Gas erhaltende Flüssigkeit enthalten ist, abhängt.

3. Gaseinleitungsgerät gemäß Anspruch 1, wobei der Diffusor ein mikroporöses Material umfasst.

4. Gaseinleitungsgerät gemäß einem der vorangegangenen Ansprüche, wobei das Applikationsrohr eine Länge von 30 cm oder mehr, vorzugsweise von 40 cm oder mehr, aufweist.

5. Gaseinleitungsgerät gemäß einem der vorangegangenen Ansprüche, wobei der Drucksensor (5) die Messung des Drucks im Innern der Messkammer (9) kontinuierlich oder immer dann, wenn eine Druckaufzeichnung erforderlich ist, ermöglicht.

6. Gaseinleitungsgerät gemäß einem der vorangegangenen Ansprüche, wobei der Temperatursensor (6) die Messung der Gastemperatur im Innern der Messkammer (9) kontinuierlich, in regelmäßigen Abständen oder immer dann, wenn eine Temperaturaufzeichnung erforderlich ist, ermöglicht.

7. Gaseinleitungsgerät gemäß einem der vorangegangenen Ansprüche, wobei sich ein Gasabsperrventil (2) zwischen der Druckgas-Quelle (1) und dem Einlassventil (3) befindet.

8. Gaseinleitungsgerät gemäß einem der vorangegangenen Ansprüche, wobei die Druckgas-Quelle (1) ein beliebiges unter Druck stehendes Gas (verflüssigt oder nicht) enthält oder die besagte Druckgas-Quelle eine Druckleitung ist, aus der das einzuleitende Gas erhalten werden kann.

9. Gaseinleitungsgerät gemäß einem der vorangegangenen Ansprüche, wobei die Temperatur- und Drucksensoren an ein elektronisches Steuersystem angeschlossen sind.

10. Verfahren zum Einleiten von vorbestimmten Gasmengen in eine Flüssigkeit, wobei das Verfahren

   a) die Bereitstellung des Geräts gemäß einem der Ansprüche 1 bis 9;
   b) das Öffnen des Einlassventils (3), um den kontrollierten Durchfluss einer bestimmten Menge Gas in eine Messkammer (9) für das einzuleitende Gas zu ermöglichen, während das Auslassventil (4) geschlossen bleibt;
   c) die Messung des internen Druckunterschieds durch den Drucksensor (5), der den Druckunterschied im Innern der Messkammer (9) registriert bis ein vorbestimmter Wert zum Einleiten einer vorbestimmten Gasmenge in Gramm erreicht ist, und das Schließen des Einlassventils (3) sobald der gewünschte Druck erreicht ist;
   d) die Messung der Temperatur des im Innern der Messkammer (9) gelagerten Gases durch den Temperatursensor (6) sobald das Einlassventil (3) geschlossen ist;
   e) die Berechnung, unter Verwendung eines Mikroprozessors, des internen Enddrucks im Innern der Messkammer, der erforderlich ist, um die an einer Steuertafel (11) vorbestimmte Gasmasse zu entladen, wobei der Mikroprozessor anschließend ein Öffnungssignal an das Auslassventil sendet, während der interne Druck der Messkammer (9) kontinuierlich gemessen wird bis der berechnete Enddruck erreicht ist; und das Schließen des Auslassventils,
   f) das Einspritzen des Gases, das um dessen Auflösung zu erleichtern in sehr kleine Blasen zerteilt wird, in das Flüssigkeitsvolumen; und
   g) die Wiederholung des Einleitungsvorgangs bis die vorbestimmte Gasmenge erreicht ist,

   umfasst.

11. Gaseinleitungsverfahren gemäß Anspruch 10, wobei das besagte Verfahren das Schließen des Gasauslassventils (4) umfasst, nachdem der Mikroprozessor den berechneten Druck im Innern der Messkammer nachgewiesen hat, und wobei der Enddruck in Abhängigkeit von der Menge in Gramm oder der zu applizierenden Dosis berechnet wird.

12. Gaseinleitungsverfahren gemäß einem der Ansprüche 10 oder 11, wobei die Applikation Dosen in Gramm von gasförmigem $SO_2$ umfasst.

13. Gaseinleitungsverfahren gemäß einem der Ansprüche 10 bis 12, wobei die Applikation das Einspritzen von Gas, das in Massenmengen mit einer Genauigkeit im Bereich von 0,1 Gramm bis 9,9 Gramm gemessen wird, umfasst.

14. Gaseinleitungsverfahren gemäß einem der Ansprüche 10 bis 13, wobei die Applikation das Einspritzen von Gas, das in Massenmengen mit einer Genauigkeit von 0,1 Gramm gemessen wird, umfasst.

15. Gaseinleitungsverfahren gemäß einem der Ansprüche 10 bis 14, wobei die Applikation das Einspritzen von in Massenmengen gemessenem gasförmigem $SO_2$ in das in Fässern enthaltene Weinvolumen umfasst.

## Revendications

1. Un dispositif servant à fournir quantités prédéterminées de gaz dans un liquide, le dispositif comprenant :

   · une chambre de mesure (9) d'un volume connu, reliée à une source de gaz comprimé (1) au moyen d'un conduit d'entrée, et reliée à un système de fourniture final ou dispositif d'injection (10) au moyen d'un conduit de sortie ;
   · au moins un détecteur pour mesurer la pression et un détecteur pour mesurer la température à l'intérieur de la chambre de mesure (9), les détecteurs étant reliés à un système de contrôle électronique comprenant un circuit numérique à microprocesseur (8) et un tableau de commande (11) où le microprocesseur permet de traiter les informations délivrées par les capteurs de température et de pression et effectue les calculs nécessaires à partir des données entrées dans le tableau de commande (11) afin de déterminer la dose de gaz appropriée à appliquer ;
   · une soupape d'entrée (3) et une soupape de sortie (4),
   · où la soupape d'entrée (3) est une électrovalve située entre la source de gaz comprimé (1) et la chambre de mesure (9), permettant de réguler le passage sous contrôle du gaz de la source de gaz comprimé (1) à la chambre de mesure (9) tout en maintenant la soupape de sortie (4) en position de fermeture,
   · et où la soupape de sortie (4) est située entre la chambre de mesure (9) et le système de fourniture final ou dispositif d'injection (10), étant une électrovalve qui permet de réguler le passage sous contrôle du gaz de la chambre de mesure au système de fourniture final ou dispositif d'injection (10)
   · où le système de fourniture final ou dispositif d'injection comprend un long tube d'application (13) doté d'un diffuseur qui cisaille le gaz en bulles de petite taille dans le but de faciliter sa dissolution.

2. Le dispositif d'alimentation en gaz selon la revendication 1, où le longueur du tube d'application dépend de la taille des bulles émises par le diffuseur et de la taille du conteneur contenant le liquide recevant le gaz injecté.

3. Le dispositif d'alimentation en gaz selon la revendication 1, où le diffuseur comprend une matière microporeuse.

4. Le dispositif d'alimentation en gaz selon n'importe laquelle des revendications précédentes, où le tube d'application possède une longueur de 30 cm ou davantage, de préférence supérieure à 40 cm.

5. Le dispositif d'alimentation en gaz selon n'importe laquelle des revendications précédentes, où le capteur de pression (5) permet de mesurer la pression à l'intérieur de la chambre de mesure (9), de manière continue ou à chaque fois qu'il est nécessaire d'enregistrer la pression.

6. Le dispositif d'alimentation en gaz selon n'importe laquelle des revendications précédentes, où le capteur de température (6) permet de mesurer la température du gaz à l'intérieur de la chambre de mesure (9), de manière continue, à intervalles réguliers ou à chaque fois qu'il est nécessaire d'enregistrer la température.

7. Le dispositif d'alimentation en gaz selon n'importe laquelle des revendications précédentes, où une vanne d'arrêt du gaz (2) est située entre la source de gaz comprimé (1) et la soupape d'entrée (3).

8. Le dispositif d'alimentation en gaz selon n'importe laquelle des revendications précédentes, où la source de gaz comprimé (1) contient n'importe quel type de gaz sous pression (liquéfié ou non) ou bien dans lequel ladite source de gaz comprimé est une ligne sous pression de laquelle il est possible d'extraire le gaz.

9. Le dispositif d'alimentation en gaz selon n'importe laquelle des revendications précédentes, où les détecteurs de température et de pression sont raccordés à un système de contrôle électronique.

**10.** Une méthode servant à fournir quantités prédéterminées de gaz dans un liquide, la méthode comprenant :

a) la fourniture du dispositif selon l'une des revendications 1 à 9 ;

b) l'ouverture de la soupape d'entrée (3) en vue de contrôler le passage d'une quantité déterminée de gaz vers une chambre de mesure (9) pour injecter le gaz, tout en maintenant la soupape de sortie (4) en position de fermeture ;

c) la mesure des écarts de pression interne donnés par le détecteur de pression (5), qui enregistre les écarts de pression à l'intérieur de la chambre de mesure (9) jusqu'à ce que soit atteinte une valeur prédéterminée dans l'objectif de fournir une quantité prédéterminée de gaz calculée en grammes, et permettant, une fois que la pression désirée est obtenue, de fermer la soupape d'entrée (3) ;

d) la mesure de la température du gaz se trouvant à l'intérieur de la chambre de mesure (9) à l'aide d'un détecteur de température (6) une fois que la soupape d'entrée (3) est en position de fermeture ;

e) le calcul, à l'aide d'un microprocesseur, de la pression interne finale à l'intérieur de la chambre de mesure requise pour libérer la masse de gaz qui a été prédéterminée au moyen d'un tableau de commande (11), et le microprocesseur émettant par la suite un signal d'ouverture en direction de la soupape de sortie tout en continuant à mesurer la pression interne de la chambre de mesure (9) jusqu'à ce que la pression calculée finale soit atteinte, et permettant de mettre la soupape de sortie en position de fermeture ;

f) l'injection du gaz cisaillé en bulles de très petite taille en vue d'en faciliter la dissolution dans le volume de liquide ; et

g) la répétition de l'opération de fourniture jusqu'à ce que la quantité prédéterminée de gaz ait été atteinte.

**11.** La méthode d'alimentation en gaz selon la revendication 10, où ladite méthode comprend la fermeture de la soupape de sortie (4) après que le microprocesseur a calculé la pression à l'intérieur de la chambre de mesure, où la pression finale est calculée en fonction d'une quantité calculée en grammes ou bien de la dose à appliquer.

**12.** La méthode d'alimentation en gaz selon l'une des revendications 10 ou 11, où l'application comprend des doses d'$SO_2$ à l'état gazeux calculée en grammes.

**13.** La méthode d'alimentation en gaz selon l'une des revendications 10 à 12, où l'application comprend l'injection d'une masse de gaz avec une précision allant de 0,1 à 9,9 grammes.

**14.** La méthode d'alimentation en gaz selon l'une des revendications 10 à 13, où l'application comprend l'injection d'une masse de gaz avec une précision de 0,1 gramme.

**15.** La méthode d'alimentation en gaz selon l'une des revendications 10 à 14, où l'application comprend l'injection d'une masse d'$SO_2$ à l'état gazeux à l'intérieur des tonneaux de vin.

FIG. 1

FIG. 2

FIG. 3

FIG. 4A

FIG. 4B

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2246651
- ES 1004225 U
- DE 1442341
- DE 2404500